# EUROPEAN PATENT SPECIFICATION

(11) **EP 3 694 072 B1**
(45) Date of publication and mention of the grant of the patent: **04.11.2026**
(21) Application number: 20153894.9
(22) Date of filing: 05.09.2017
(51) Int. Cl.: H02J 4/00, H02J 4/25, H02M 7/04, H02J 3/38, H02J 3/04

(54) **MODULAR DIRECT CURRENT (DC) ARCHITECTURES**
MODULARE GLEICHSTROM (DC)-ARCHITEKTUREN
ARCHITECTURES MODULAIRES DE COURANT CONTINU (CC)

(30) Priority: 20.12.2016 US 201615385365
(43) Date of publication of application: 12.08.2020
(62) Document number(s) of the earlier application(s) in accordance with Art. 76 EPC: 17767972.7 / 3 545 598
(73) Proprietor: Google LLC, Mountain View, CA 94043 (US)
(72) Inventor: LAO, Eduardo, Mountain View, CA 94043 (US); SASTRY, Jyoti, Mountain View, CA 94043 (US); KENNEDY, James, Mountain View, CA 94043 (US); MALONE, Christopher Gregory, Mountain View, CA 94043 (US); SAKALKAR, Varun, Mountain View, CA 94043 (US)
(74) Representative: Betten & Resch

(56) References cited:
- WO-A1-2016/131460
- US-A1- 2014 240 880

## Description

### BACKGROUND

Contemporary power distribution architectures are typically radial and primarily employ an Alternating Current (AC) based power distribution methods. These distribution schemes do not provide sufficiently modular, scalable, or cost effective electrical distribution solutions for data centers and other related facilities that include multiple information processing systems (i.e., multiple loads).

Document WO 2016/131460 A1 discloses that a plurality of DC bus subsections can be electrically connected in a ring configuration and that several flywheel energy storage devices may be directly connected to each of the plurality of connectable DC bus subsections.

Document US 2014/240880 A1 discloses a power distribution system comprising: a first distribution section that receives power from at least one power source, wherein a characteristic of the received power is adjusted by a first rectifier unit coupled to a first power bus of the first distribution section; a second distribution section that is separate from the first distribution section and that receives power from at least one power source, wherein a characteristic of the received power is adjusted by, a second rectifier unit coupled to a second power bus of the second distribution section; and a first swing rectifier connected to the first distribution section and connected to the second distribution section, the first swing rectifier configured to provide power to the first power bus and to provide power to the second power bus, wherein the first swing rectifier dynamically adjusts the power capacity of the first distribution section that is available to one or more loads, and dynamically adjust the power capacity of the second distribution section that is available to one or more loads.

### SUMMARY

The present invention is defined in the independent claims. Preferred embodiments are defined in the dependent claims.

The present specification is related to modular power distribution architectures for supplying direct current to multiple loads at a given location.

A variety of DC architectures are described that provide scalable DC power distribution in a modular framework. Moreover, the power architectures can be adapted based on unique energy demands of different information processing facilities. This specification proposes a system that leverages and incorporates existing technologies from alternate industries to produce low cost and scalable power supply solutions. The modular and scalable features of the described DC architectures will enable deployment of power solutions that use smaller footprints, while enabling pooling of power to more effectively utilize resources. Additionally, use of the DC distribution systems described in this specification aids in successfully leveraging technologies which are germane in alternate industries to enhance power distribution in the data center application space.

According to the invention, a power distribution system is provided, which includes all the features of claim 1, namely in particular includes a first distribution section that receives power from at least one power source, wherein a characteristic of the received power is adjusted by a first rectifier unit coupled to a first power bus of the first distribution section. The power distribution system includes a second distribution section that is separate from the first distribution section and that receives power from at least one power source, wherein a characteristic of the received power is adjusted by a second rectifier unit coupled to a second power bus of the second distribution section. The power distribution system further includes a first swing rectifier connected to the first distribution section and connected to the second distribution section, the first swing rectifier configured to provide power to the first power bus and to provide power to the second power bus, wherein the first swing rectifier dynamically adjusts the power capacity of the first distribution section that is available to one or more loads, and dynamically adjust the power capacity of the second distribution section that is available to one or more loads.

In some implementations, the power distribution system further includes a first switch breaker unit associated with the first power bus and disposed in the first distribution section and a second switch breaker unit associated with the second power bus and disposed in the second distribution section, wherein the first and second switch breaker units each include a power rating that is indicative of a total power output of the respective first and second distribution sections.

In some implementations, the first swing rectifier is coupled to the first and second switch breaker units to increase an availability of power that can be provided from the first power bus to the one or more loads and to increase an availability of power that can be provided from the second power bus to the one or more loads. In some implementations, the at least one power source of the first distribution section and the at least one power source of the second distribution section are the same power source.

In some implementations, the first distribution section further includes at least one additional rectifier unit that cooperates with the first rectifier unit to form a ring bus architecture for the first power bus, and wherein the ring bus receives adjusted power from the rectifier units for distribution to the one or more loads. In some implementations, the second distribution section further includes at least one additional rectifier unit that cooperates with the second rectifier unit to form a ring bus architecture for the second power bus, and wherein the ring bus receives adjusted power from the rectifier units for distribution to the one or more loads.

In some implementations, the first distribution section and second distribution section are arranged in a radial power distribution architecture to provide power to a plurality of devices disposed within a data center facility. In some implementations, the first distribution section and second distribution section are arranged in a radial power distribution architecture that can be expanded to include one or more additional distribution sections and one or more additional swing rectifiers. In some implementations, the system further includes a third distribution section and a second swing rectifier that is connected to the second and third distribution sections.

In another example, which is not claimed herein, an electronic system is described and includes at least one control device including one or more processing devices; one or more machine-readable storage devices for storing instructions that are executable by the one or more processing devices to perform operations comprising: monitoring power received by a first distribution section, from at least one power source, wherein a characteristic of the received power is adjusted by a first rectifier unit coupled to a first power bus of the first distribution section. The operations include monitoring power received by a second distribution section from at least one power source, the second distribution system being separate from the first distribution section, and wherein a characteristic of the received power is adjusted by a second rectifier unit coupled to a second power bus of the second distribution section. The operations further include enabling, by a first swing rectifier connected to the first distribution section and connected to the second distribution section, dynamic adjustment of the power capacity of the first distribution section that is available to one or more loads and dynamic adjustment of the power capacity of the second distribution section that is available to one or more loads.

In some implementations, enabling dynamic adjustment of power includes using the first swing rectifier to provide power to the first power bus in response to a demand for power exceeding a threshold demand, and using the first swing rectifier to provide power to the second power bus in response to the demand for power exceeding a threshold demand. In some implementations, the system further includes a first switch breaker unit associated with the first power bus and disposed in the first distribution section and a second switch breaker unit associated with the second power bus and disposed in the second distribution section, wherein the first and second switch breaker units each include a power rating that is indicative of a total power output of the respective first and second distribution sections.

In some implementations, operations performed by the one or more processing devices further include: increasing the availability of power that can be provided to the one or more loads in response to engaging a swing function of the first swing rectifier, wherein the first swing rectifier is coupled to the first and second switch breaker units to enable the provision of available power from the first power bus and from the second power bus. In some implementations, the first distribution section further includes at least one additional rectifier unit that cooperates with the first rectifier unit to form a ring bus architecture for the first power bus, and wherein operations performed by the one or more processing devices further include: monitoring adjusted power received by the ring bus from the rectifier units and providing a control signal to cause the distribution of adjusted power to the one or more loads.

In some implementations, the second distribution section further includes at least one additional rectifier unit that cooperates with the second rectifier unit to form a ring bus architecture for the second power bus, and wherein operations performed by the one or more processing devices further include: monitoring adjusted power received by the ring bus from the rectifier units and providing a control signal to cause the distribution of adjusted power to the one or more loads. In some implementations, the first distribution section and second distribution section are arranged in a radial power distribution architecture to provide power to a plurality of devices disposed within a data center facility.

The subject matter described in this specification can be implemented in particular implementations and can result in one or more of the following advantages. DC power distribution architectures are provided which are modular and scalable and that utilize interconnections of multiple rings to enable scaling of the architecture. Modularity is accomplished based on configurable connections that exist between various sections of the architecture. For example, the architecture can include a multiple ring bus arrangement in which rings are interconnected through a swing rectifier device to facilitate power sharing between one or more rings/sections of the architecture. The swing rectifier can be shared between multiple ring buses and facilitates dynamic upscaling of available DC based power that can be supplied by the distribution system.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIGs. 1A and 1B illustrate example open ring radial DC distribution architectures.
FIG. 2 illustrates an example open ring radial DC distribution architecture including a swing rectifier intermediate a first section and a second section.
FIG. 3 illustrates multiple example ring bus architectures for DC distribution including a swing rectifier intermediate a first ring bus and a second ring bus.

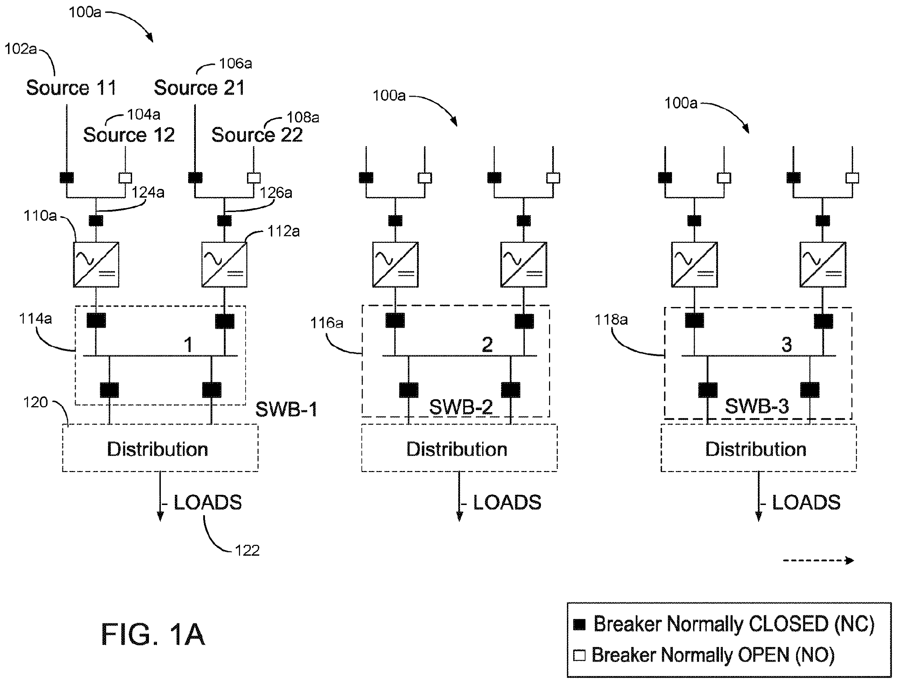

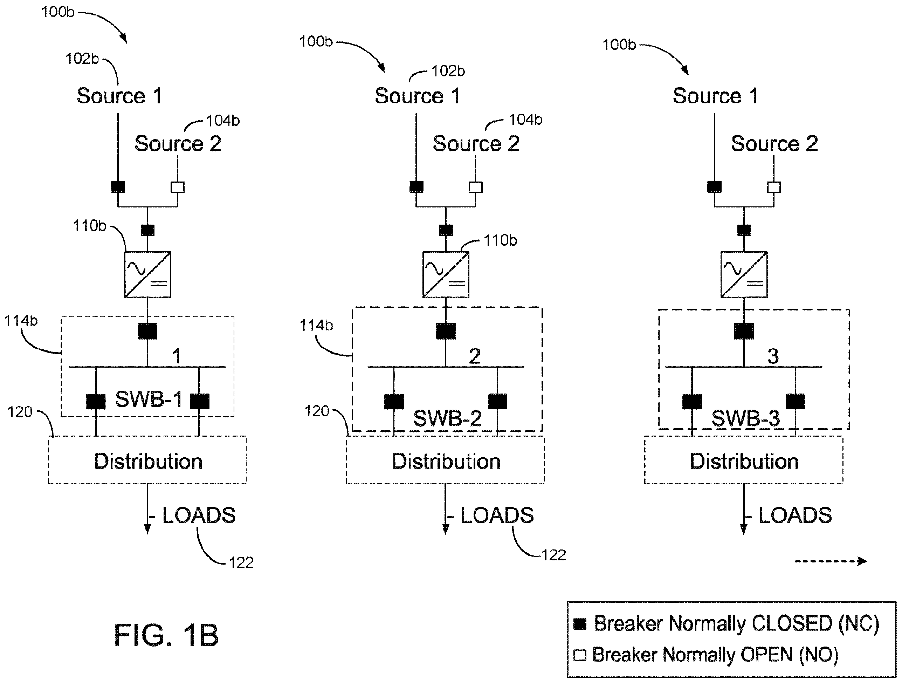

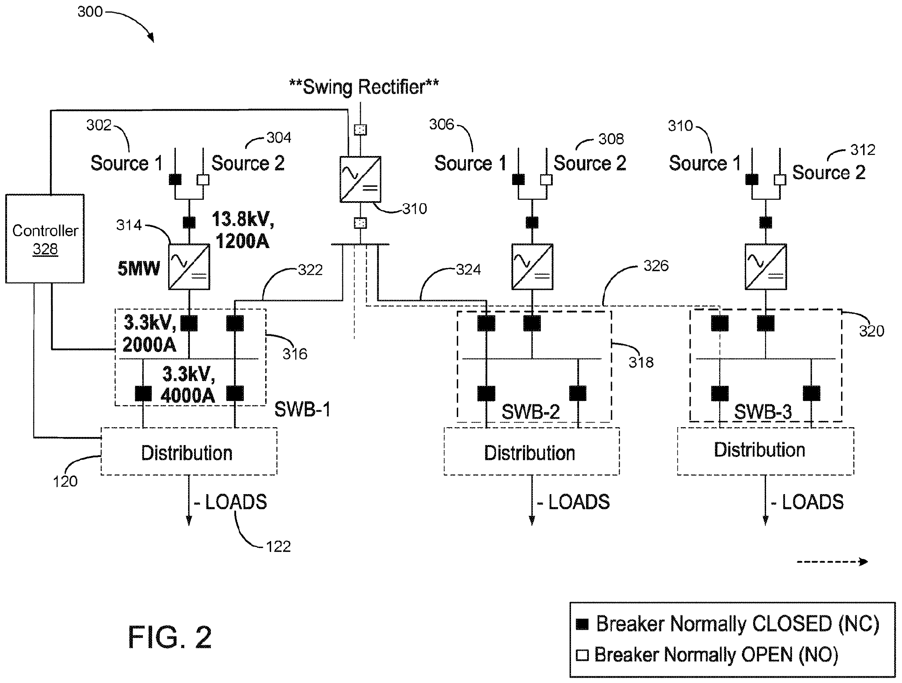

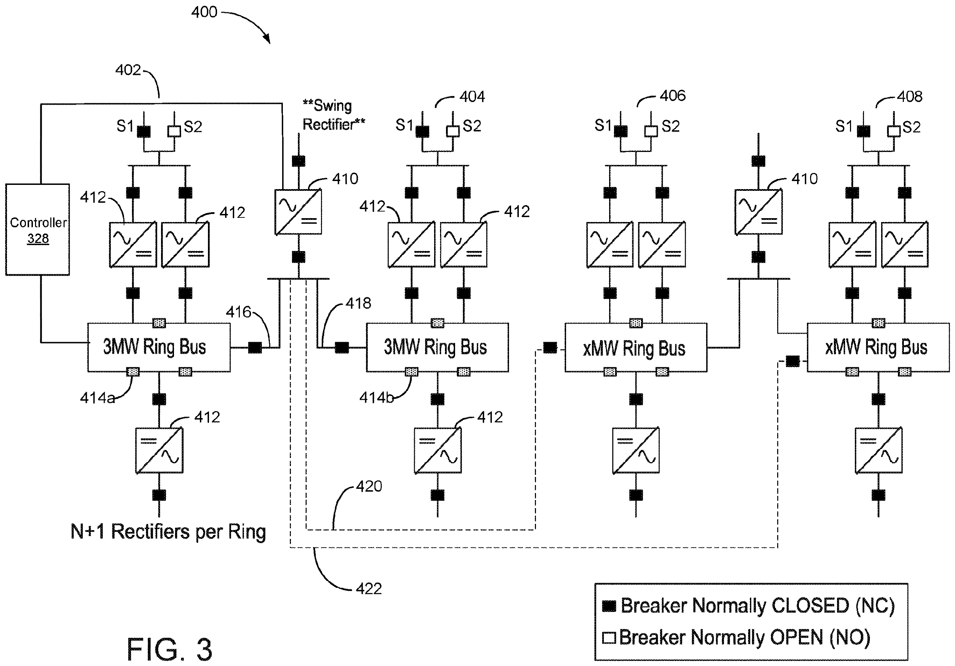

Like reference numbers and designations in the various drawings indicate like elements. Fig. 1A, 1B and 2 show background examples. Fig. 3 shows a configuration according to an embodiment of the present invention.

### DETAILED DESCRIPTION

Radial and ring based DC power distribution architectures are described that include functionality and features which enable building out of the architecture through the use of modules or sections. Power (voltage and current) supply sources can be connected to power attribute adjustment devices such as a transformer and rectifier set. The architecture enables multiple power supply source types to be connected to, and ultimately provide power to, a variety of information computing systems such as systems used in data centers or information technology (IT) facilities.

Example implementations described in this written description enable power availability that can be supplied to additional loads based, in part, on a section of the distribution architecture being dual fed from the multiple power source types. Supplied DC power can be un-stranded, e.g., upscaled as needed, through oversizing of the components within a section to withstand increases in the available power that can be output for a particular section. A ring bus architecture can be configured to include multiple ring buses that supply current to operations that require enhanced reliability relative to radial distribution architectures.

For a given section distribution section, concurrently maintaining available power output of the section is achievable through use of one or more rectifiers per group of loads that are supported powered by the section. Moreover, redundancy is built into the DC distribution architecture through the use of multiple rectifier units per section. Hence, multiple power supply sources can be connected to, and integrated at, each section. Power supply sources can include AC power supplied by a conventional large-scale generating station or supply sources that are provided by back-up power devices such as diesel generators, batteries or other uninterruptible power supplies connected each section. As described in more detail below, FIG. 1A/1B and FIG. 2 each describe example radial distribution architectures, while FIG. 3 describes an example ring distribution architecture (described below).

For radial distribution systems at a given location or facility, independent supply sources (e.g., section 100a) branch out to several distribution points 120 with no (or few) intermediate connections between distinct supply sources (e.g., between the different sections 100a). Radial power distribution systems are frequently used because the systems employ a simplistic design that is inexpensive to arrange and construct. In radial systems, operation and expansion are simple but reliability is limited.

For example, certain faults, including loss of conductor cable, primary supply, or transformer device, can result in outage for all loads 122 (e.g., information/computing systems or racks) served by supply source/section 100a. Furthermore, electrical power to loads 122 can be interrupted when any hardware items associated with a particular section 100a must be de-energized to perform routine maintenance or service actions.

FIGs. 1A and 1B illustrate example open-ring radial DC distribution architectures not being part of the invention. As shown in FIG. 1A, an example distribution architecture can include one or more distribution sections 100a. Each distribution section 100a can include at least a first set of source inputs 102a, 104a, and at least a second set of source inputs 106a, 108a. Each source input 102a (source 11), 104a (source 12) in the first set can correspond to distinct power supply sources, and each source input 106a (source 21), 108a (source 22) in the second set can also correspond to the same respective distinct power supply sources. As described in this specification, respective first and second distribution sections (discussed in the various figures) are separate from each other and function independent of each other in various implementations.

In some implementations, source 11 and source 21 can be the same source for each distribution section, while in other implementations, source 11 and 21 can be different sources for each distribution section. Likewise, in some implementations, source 12 and source 22 can be the same source for each distribution section, while in other implementations, respective source 12 and 22 can be different sources for each distribution section. For example, input 102a can correspond to an AC supply signal provided by a first electric sub-station. In contrast, input 104a can correspond to an AC or DC supply signal provided by a first back-up power source. In general, source 11 and source 21 each receive power from different distribution locations or sub-stations, while source 12 and source 22 each receive power from different distribution locations or sub-stations.

Input 106a can correspond to an AC supply signal provided by a second electric sub-station that is distinct from the first electric sub-station. In contrast, input 108a can correspond to an AC or DC supply signal provided by a second back-up power source that is distinct from the first back-up power source. In some implementations, the back-up power source(s) can include one or more back-up power systems that include at least one of a generator system, a battery back-up system, and/or an uninterruptable power supply (UPS).

Section 100a of FIG. 1A includes redundant sets of supply input sources, namely the first set 102a and 104a and the second set 106a and 108a. Thus, section 100a can be described as a dual fed section that receives electric power from two distinct sets of input sources. In contrast, section 100b of FIG. 1B, includes a single set of supply input sources. Thus, section 100b can be described as a single fed section that receives electric power from a single set of input sources. As will be shown described below, a description of section 100a will also correspond to section 100b. However, as section 100a is described, the minor distinctions between sections 100a and 100b will be noted for clarity.

Section 100a of FIG. 1A further includes multiple circuit breakers. In general, circuit breakers are electrical switches designed to protect an electrical circuit from damage that can be caused by an overcurrent event. Like most electrical switches, the breakers of section 100a include a closed position and an opened position. For a given current flow path, at least one breaker along the path can be in a normally closed (NC) switch position to ensure current flows along the path as needed based on system operational requirements. Alternatively, another breaker (e.g., in a parallel circuit path) can be in a normally opened (NO) switch position to inhibit current flow as needed.

In section 100a, for the first and second sets of source inputs, inputs 102a and 106a can be the primary current flow paths and thus, a breaker nearest to the respective source inputs 102a, 106a can be set to NC. Conversely, source inputs 104a and 108a can be the secondary or back-up current flow path and thus, a breaker nearest to the respective source inputs 104a, 108a can be set to NO. Additional breakers along a path common to source inputs 102a, 104a and common to inputs 106a, 108a can also be set to NC to ensure that current flows as required to supply power to each distribution points 120 and loads 122 (e.g., information/computing systems or racks).

FIG. 1A, section 100a further includes a first rectifier 110a disposed along a first current flow path 124a and a second rectifier 112a disposed along a second current flow path 126a. In some implementations, rectifiers 110a and 112a can be conventional rectifier/electrical devices that convert altemating current (AC), which periodically reverses direction, into direct current (DC), which flows in only one direction. Thus, rectifiers 110a, 112a can generally be described as adjusting a characteristic (i.e., converting from AC to DC) of the power signal received at the source inputs. In some alternative implementations, other devices capable of supporting AC to DC conversion may also be installed or disposed within section 100a.

Distribution point 120 represents example distribution or switch breaker units, such as electrical panels in which distribution of conductor cables originates from the electrical panel and extends to the one or more loads 122 that require electric power. In the context of a data center facility, loads 122 can represent one or more server racks that include a multitude of computing devices or computer servers that are powered based on current supplied by source inputs 102a, 104a, 106a, or 108a.

As used herein, a switch breaker unit can include multiple circuit breakers and each circuit breaker can function as an automatic off-switch which operates to prevent the flow of electric current in response to detection of a fault condition. Example fault conditions can include current overload conditions, short circuit conditions, or other circuit conditions that have the potential to negatively affect circuits of the described power distribution sections.

In some implementations, one or more sections 100a can be deployed and installed at a particular location such as facilities including a warehouse, a data center, or a distribution center. The quantity of sections 100a that are deployed can vary based on the electrical power demand for a given facility. Hence, deployment and installation of sections 100a can be scaled upwardly or downwardly in response to increases or decreases in power demands of a given data center.

In section 100a, rectifier 110a is along the current flow path 124a that corresponds to the first set of input sources 102a, 104a, while rectifier 112a is along the current flow path 126a that corresponds to the second set of input sources 106a, 108a. As a distinction, section 100b of FIG. 1B differs from section 100a in that section 100b only includes a single rectifier 110b. The underlying difference between section 100a and section 100b is that the dual fed aspect of section 100a enables that particular distribution section to supply more electric power to downstream loads than the single fed aspect of section 100b.

Each of rectifiers 110a and 110b are coupled or connected to an example power bus 114a that includes one or more NC breakers. Although four NC breakers are shown in FIG. 1A and three NC breakers are shown in FIG. 1B, in various alternative implementations, more or fewer breakers (set to either NC or NO) can be utilized in conjunction with power bus 114a. Distribution points 120 receive adjusted (DC) power signals from power bus I 14a and provide a coupling/connecting supply point for loads 122 to receive supply current necessary to power computing devices disposed within, for example, one or more computer or server racks.

FIG. 2 illustrates an example open ring radial DC distribution architecture including a swing rectifier intermediate a first section and a second section not being part of the invention. The hardware arrangement of FIG. 2 is based largely on the hardware arrangement of FIG. 1B. As shown in FIG. 2, the example distribution architecture can include one or more distribution sections 300. Each distribution section 300 can include a set of source inputs 302, 304. Much like FIG. 1B discussed above, each source input 302, 304 of the set can correspond to distinct power supply sources.

The distribution architecture of FIG. 2 enables dynamic distribution of supplemental power to one or more sections 300 using swing rectifier 310. In some implementations, swing rectifier 310 receives power from a source input, such as source input 302, 304 or another distinct source input. Rectifier 310 can include multiple thyristor units that are configured to enable swing functionality to provide current flow from rectifier 310 to one or more power buses 316, 318, 320.

In some implementations, the thyristor units include electronic components (e.g., semiconductor devices) that can receive control signals from an example controller (described below) for activating and controlling at least the swing functionality of rectifier 310. As shown, current flow from rectifier 310 can be provided to power bus 316 via current flow path 322, can be provided to power bus 318 via current flow path 324, and optionally, can be provided to power bus 320 via current flow path 326.

As used herein, swing functions of swing rectifier 310 (and swing rectifier 410 described below) correspond to interconnecting distinct power sections to enable dynamic upscaling (increasing power capacity) or downscaling (decreasing power capacity) of an example power distribution architecture.

Accordingly, in the distribution architecture of FIG. 2, rectifier 310 can be utilized to dynamically distribute supplemental power to one or more additional loads 122 based on transient or longer-term increases in user demand. In some implementations, rectifier 310 can be connected to an electronic controller 328 that is configured to monitor, for a given data center, computing system (e.g., loads 122 or server racks) power demands at distribution points 120 and at power buses 316, 318, 320. Although a single connection is shown from controller 328 to distribution point 120 and power bus 316, in some implementations, controller 328 can also be connected to power buses 318 and 320 and the corresponding distribution points 120 that are associated with each power bus 318, 320.

In some implementations, controller 328 monitors adjusted power received by the buses 316, 318 and 320 (and ring bus 414 described below) from their respective rectifier units and provides a control signal to rectifier 310 (and rectifier 410 described below) to cause the distribution of adjusted power that is available to one or more loads. In general, when controller 328 (or a user) detects that the computing system power demands will exceed, or have exceeded, a threshold demand, controller can provide a control signal to rectifier 310 to provide supplemental power to one or more data buses.

The supplemental power from rectifier 310 provides additional output power that can be used by loads 122 to meet increases in power demand. Hence, in some instances, controller 328 enables dynamic adjustment of power available at one or more power buses 316, 318, 320 using rectifier 310. Thus, in one instance, dynamic adjustment of power can include using rectifier 310 to provide power to bus 316 in response to a demand for power exceeding a threshold demand, and using rectifier 310 to provide power to bus 318 in response to the demand for power exceeding a threshold demand.

During operation, and when a power signal is supplied to the distribution architecture of FIG. 2, distribution sections 300 can receive, for example, a voltage of 13.8kV and a current of, for example, 1200A from a particular input source 302, 304. A transformer (not shown) and rectifier 314 can cooperate to adjust/step-down voltage attributes of the power signal to provide, for example, a 5MW power capacity. The 5MW power is ultimately received by power bus 316 to supply power to one or more downstream loads.

As shown in FIG. 2, loads 122 coupled to power bus 316, through distribution point 120, may have an actual power demand of 3.3kV at 2000A (i.e., 6.6MW) which exceeds the 5MW power capacity of power bus 316. In this instance, power bus 316 can be described as being in an oversubscribed state because actual power demands exceed the 5MW output capacity of power bus 316. In some implementations, output power capacity represents a power rating of the power bus 316, 318, or 320.

In response to this oversubscription at power bus 316 (due to the 5MW bottleneck), a user, or an example electronic controller 328, can cause rectifier 310 to provide supplemental power via flow path 322 to increase the output power of power bus 316. The supplemental power provided by rectifier 310 causes the output power capacity of bus 316 to be increased, for example, to 3.3kV at 4000A (i.e., 13.2MW). Thus, power attributes of power bus 316 can be dynamically adjusted, upscaled or oversized to meet transient or longer-term increases in energy demands and dynamically downscaled or downsized when the increased demand subsides.

According to an embodiment of the invention, FIG. 3 illustrates multiple example ring bus architectures for DC distribution including a swing rectifier 410 intermediate a first section 402 having a first ring bus 414a and a second section 402 having a second ring bus 414b. As shown in FIG. 3, each section 402, 404, 406 and 408 can each include a set of source inputs 402 and each source input of the set of source inputs 402 can correspond to distinct power supply sources (S1 and S2). Much like the examples of FIG. 2, the distribution architecture of FIG. 3, also enables dynamic distribution and adjustment of supplemental power to one or more sections 400 through use of swing rectifier 410.

FIG. 3 describes an example ring distribution architecture according to the invention. For ring distribution systems at a given location or facility, distribution begins at source section 402 in which the source inputs (S1 or S2) can be connected to, or encircle, an area serving one or more of the distribution points or loads described above. The current carrying conductor of the ring system returns to the same source/section 402. In contrast to the radial distribution design, the loop distribution architecture is typically more expensive to construct than the radial system. However, ring based power distribution architectures typically provide increased reliability when compared to the radial system.

For example, in loop systems, circuit breakers can be used to sectionalize the loop into one more distinct sections such that one section can be serviced or maintained independent of another section. Further, ring based systems can be utilized in facilities or locations in which continuity of service is of considerable importance (e.g., in medical centers).

Accordingly, in a loop or ring bus distribution architecture of FIG. 3, circuit breaker(s) 415 can be utilized to sectionalize ring bus 414a into one or more distinct sections such that a first section can be serviced or maintained independent of a different second section. In the embodiment of FIG. 3, ring bus 414a includes three sections and each section corresponds to, and receives a power signal from, a particular rectifier 412. In alternative implementations, instead of a configuration that includes three rectifiers and three ring bus sections, ring bus 414a/b can each include more or fewer rectifiers 412 and thus more or fewer corresponding sections.

As shown, the distribution architecture of FIG. 3 includes a multiple ring bus arrangement in which rings are interconnected through swing rectifier 410 to facilitate power sharing between one or more rings/sections of the architecture. Swing rectifier 410 is shared between multiple ring buses 414a/b, and thus facilitates dynamic upscaling (e.g., adjustment) of available DC power that can be supplied by the overall distribution architecture. Moreover, the on-demand interconnection of multiple ring buses 414a/b provides an architecture that can be dynamically scaled as needed to meet changing system power demands.

For example, in some implementations, 3MW ring bus 414a provides a common bus across multiple rectifiers 412. Section 400 can include three rectifiers 412 that are each sized at 1MW output power, thus providing a total of 3MW power capacity per ring bus 414a/b. In some instances. a user or an electronic controller 328 detects or determines that additional output power is required from ring bus 414a/b based on a monitored power demand exceeding a threshold power demand. In one example, the electronic controller 328 is the at least one control device including one or more processing devices. Swing rectifier 410 then receives a control signal to cause the rectifier to provide additional capacity to one or more ring buses 414a/b. As used herein, additional capacity corresponds to a section being able to support additional power demands.

As shown in FIG. 3, going from left to right, current flow from rectifier 410: 1) can be provided to a first ring bus 414a via current flow path 416; 2) can be provided to a second ring bus 414a via current flow path 418; and 3) optionally, can be provided to a third and fourth ring buses 414 via current flow paths 420 and 422, respectively. In some implementations, N+1 rectifier units 412 can be added per ring bus 414a/b to manage power availability on a more granular scale. Thus, additional rectifiers 412 feeding distinct ring sections can be added on-demand to provide additional power that can be supplied by ring bus 414a/b.

In some implementations, certain embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. For example, certain embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially generated propagated signal, e.g., a machine-generated electrical, optical, or electromagnetic signal, which is generated to encode information for transmission to suitable receiver apparatus for execution by a data processing apparatus. The computer storage medium can be a machine-readable storage device, a machine-readable storage substrate, a random or serial access memory device, or a combination of one or more of them.

The processes and logic flows described in this specification can be performed by one or more programmable computers executing one or more computer programs to perform functions by operating on input data and generating output(s). The processes and logic flows can also be performed by, and apparatus can also be implemented as, special purpose logic circuitry, e.g., an FPGA (field programmable gate array), an ASIC (application specific integrated circuit), or a GPGPU (General purpose graphics processing unit), or other related processing devices.

Computers and processing devices suitable for the execution of a computer program can include, or be based on, general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks. The processor and the memory can be supplemented by, or incorporated in, special purpose logic circuitry.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A power distribution system (400), comprising:
multiple distribution sections (402, 404, 406, 408) comprising a first distribution section and a second distribution section, each having a respective power ring bus (414) and a respective rectifier unit (412), wherein the ring buses are interconnected via a swing rectifier (410) coupled to the multiple distribution sections; and
a controller (328) coupled to the multiple distribution sections and the swing rectifier, the controller including a processor and a non-transitory machine-readable storage device storing instructions that are executable by the processor to cause performance of operations comprising:
monitoring power provided to said first distribution section coupled to the swing rectifier, the first distribution section configured to distribute power to multiple devices,
wherein the first distribution section is configured to receive power from at least one power source, and
wherein the respective rectifier unit (412) of the first distribution section is coupled to the respective power ring bus of the first distribution section and is configured to adjust a characteristic of the received power;
monitoring power provided to said second distribution section of the multiple distribution sections coupled to the swing rectifier, the second distribution section configured to distribute power to multiple devices, wherein the second distribution section is configured to receive power from the at least one power source, and wherein the respective rectifier unit (412) of the second distribution section is coupled to the respective power ring bus of the second distribution section and is configured to adjust a characteristic of the received power;
detecting, by the controller, that a power demand at the first ring bus and/or the second ring bus exceeds a threshold;
providing, by the controller, a control signal to the swing rectifier to cause the swing rectifier to adjust a power capacity of the first and/or the second ring bus; and
adjusting, by the swing rectifier, the power capacity of the first and/or the second ring bus based on the control signal in response to the controller detecting that the power demand at the first and/or the second ring bus exceeds the threshold.

2. A method performed using a power distribution system comprising multiple distribution sections comprising a first distribution section and a second distribution section, each having a respective power ring bus and a respective rectifier unit, wherein the ring buses are interconnected via a swing rectifier coupled to the multiple distribution sections, and a controller coupled to the multiple distribution sections and the swing rectifier, the method comprises operations comprising:
monitoring power provided to said first distribution section coupled to the swing rectifier, the first distribution section distributing power to multiple devices, wherein the first distribution section receives power from at least one power source, and wherein a characteristic of the received power is adjusted by the respective rectifier unit of the first distribution section coupled to the respective power ring bus of the first distribution section;
monitoring power provided to said second distribution section of the multiple distribution sections coupled to the swing rectifier, the second distribution section distributing power to multiple devices, wherein the second distribution section receives power from the at least one power source, and wherein a characteristic of the received power is adjusted by the respective rectifier unit (412) of the second distribution section coupled to the respective power ring bus of the second distribution section;
detecting, by the controller, that a power demand at the first ring bus and/or the second ring bus exceeds a threshold;
providing, by the controller, a control signal to the swing rectifier to cause the swing rectifier to adjust a power capacity of the first and/or the second ring bus; and
adjusting, by the swing rectifier, the power capacity of the first and/or the second ring bus based on the control signal in response to the controller detecting that the power demand of the first and/or the second ring bus exceeds the threshold.

3. The power distribution system of claim 1 or the method of claim 2, wherein:
the multiple devices and first distribution section of the power distribution system are located in a data center; and
the operations comprise controlling, by the controller, dynamic upscaling or downscaling of available power at the data center using each of the ring bus, the swing rectifier, and the control signals generated by the controller, wherein upscaling refers to an increase of power capacity and downscaling refers to a decrease of power capacity.

## Patentansprüche

1. Leistungsverteilungssystem (400), umfassend:
mehrere Verteilungsabschnitte (402, 404, 406, 408), die einen ersten Verteilungsabschnitt und einen zweiten Verteilungsabschnitt umfassen, die jeweils einen jeweiligen Leistungsringbus (414) und eine jeweilige Gleichrichtereinheit (412) aufweisen, wobei die Ringbusse über einen Swing-Gleichrichter (410) miteinander verbunden sind, der mit den mehreren Verteilungsabschnitten gekoppelt ist; und
eine Steuereinheit (328), die mit den mehreren Verteilungsabschnitten und dem Swing-Gleichrichter gekoppelt ist, wobei die Steuereinheit einen Prozessor und eine nichtflüchtige maschinenlesbare Speichervorrichtung beinhaltet, die Anweisungen speichert, die durch den Prozessor ausführbar sind, um die Durchführung von Vorgängen zu veranlassen, die Folgendes umfassen:
Überwachen von Leistung, die dem ersten Verteilungsabschnitt bereitgestellt wird, der mit dem Swing-Gleichrichter gekoppelt ist, wobei der erste Verteilungsabschnitt dazu konfiguriert ist, Leistung an mehrere Vorrichtungen zu verteilen,
wobei der erste Verteilungsabschnitt dazu konfiguriert ist, Leistung von mindestens einer Leistungsquelle zu empfangen, und
wobei die jeweilige Gleichrichtereinheit (412) des ersten Verteilungsabschnitts mit dem jeweiligen Leistungsringbus des ersten Verteilungsabschnitts gekoppelt ist und dazu konfiguriert ist, eine Eigenschaft der empfangenen Leistung anzupassen;
Überwachen von Leistung, die dem zweiten Verteilungsabschnitt der mehreren Verteilungsabschnitte bereitgestellt wird, der mit dem Swing-Gleichrichter gekoppelt ist, wobei der zweite Verteilungsabschnitt dazu konfiguriert ist, Leistung an mehrere Vorrichtungen zu verteilen, wobei der zweite Verteilungsabschnitt dazu konfiguriert ist, Leistung von der mindestens einen Leistungsquelle zu empfangen, und wobei die jeweilige Gleichrichtereinheit (412) des zweiten Verteilungsabschnitts mit dem jeweiligen Leistungsringbus des zweiten Verteilungsabschnitts gekoppelt ist und dazu konfiguriert ist, eine Eigenschaft der empfangenen Leistung anzupassen;
Erkennen, durch die Steuereinheit, dass ein Leistungsbedarf am ersten Ringbus und/oder am zweiten Ringbus einen Schwellenwert überschreitet;
Bereitstellen, durch die Steuereinheit, eines Steuersignals an den Swing-Gleichrichter, um den Swing-Gleichrichter zu veranlassen, eine Leistungskapazität des ersten und/oder des zweiten Ringbusses anzupassen; und
Anpassen, durch den Swing-Gleichrichter, der Leistungskapazität des ersten und/oder des zweiten Ringbusses auf der Grundlage des Steuersignals als Reaktion darauf, dass die Steuereinheit erkennt, dass der Leistungsbedarf am ersten und/oder am zweiten Ringbus den Schwellenwert überschreitet.

2. Verfahren, das unter Verwendung eines Leistungsverteilungssystems durchgeführt wird, das mehrere Verteilungsabschnitte, die einen ersten Verteilungsabschnitt und einen zweiten Verteilungsabschnitt umfassen, die jeweils einen jeweiligen Leistungsringbus und eine jeweilige Gleichrichtereinheit aufweisen, wobei die Ringbusse über einen Swing-Gleichrichter miteinander verbunden sind, der mit den mehreren Verteilungsabschnitten gekoppelt ist, und eine Steuereinheit, die mit den mehreren Verteilungsabschnitten und dem Swing-Gleichrichter gekoppelt ist, umfasst, wobei das Verfahren Vorgänge umfasst, die Folgendes umfassen:
Überwachen von Leistung, die dem ersten Verteilungsabschnitt bereitgestellt wird, der mit dem Swing-Gleichrichter gekoppelt ist, wobei der erste Verteilungsabschnitt Leistung an mehrere Vorrichtungen verteilt, wobei der erste Verteilungsabschnitt Leistung von mindestens einer Leistungsquelle empfängt und wobei eine Eigenschaft der empfangenen Leistung durch die jeweilige Gleichrichtereinheit des ersten Verteilungsabschnitts angepasst wird, die mit dem jeweiligen Leistungsringbus des ersten Verteilungsabschnitts gekoppelt ist;
Überwachen von Leistung, die dem zweiten Verteilungsabschnitt der mehreren Verteilungsabschnitte bereitgestellt wird, der mit dem Swing-Gleichrichter gekoppelt ist, wobei der zweite Verteilungsabschnitt Leistung an mehrere Vorrichtungen verteilt, wobei der zweite Verteilungsabschnitt Leistung von der mindestens einen Leistungsquelle empfängt und wobei eine Eigenschaft der empfangenen Leistung durch die jeweilige Gleichrichtereinheit (412) des zweiten Verteilungsabschnitts angepasst wird, die mit dem jeweiligen Leistungsringbus des zweiten Verteilungsabschnitts gekoppelt ist;
Erkennen, durch die Steuereinheit, dass ein Leistungsbedarf am ersten Ringbus und/oder am zweiten Ringbus einen Schwellenwert überschreitet;
Bereitstellen, durch die Steuereinheit, eines Steuersignals an den Swing-Gleichrichter, um den Swing-Gleichrichter zu veranlassen, eine Leistungskapazität des ersten und/oder des zweiten Ringbusses anzupassen; und
Anpassen, durch den Swing-Gleichrichter, der Leistungskapazität des ersten und/oder des zweiten Ringbusses auf der Grundlage des Steuersignals als Reaktion darauf, dass die Steuereinheit erkennt, dass der Leistungsbedarf des ersten und/oder des zweiten Ringbusses den Schwellenwert überschreitet.

3. Leistungsverteilungssystem nach Anspruch 1 oder Verfahren nach Anspruch 2, wobei:
die mehreren Vorrichtungen und der erste Verteilungsabschnitt des Leistungsverteilungssystems in einem Rechenzentrum angeordnet sind; und
die Vorgänge ein Steuern, durch die Steuereinheit, eines dynamischen Hochskalierens oder Herunterskalierens von verfügbarer Leistung in dem Rechenzentrum unter Verwendung jeweils des Ringbusses, des Swing-Gleichrichters und der durch die Steuereinheit erzeugten Steuersignale umfassen, wobei sich Hochskalieren auf eine Erhöhung der Leistungskapazität bezieht und sich Herunterskalieren auf eine Verringerung der Leistungskapazität bezieht.

## Revendications

1. Système de distribution de puissance (400), comprenant :
des sections de distribution multiples (402, 404, 406, 408) comprenant une première section de distribution et une seconde section de distribution, chacune ayant un bus en anneau de puissance respectif (414) et une unité de redressement respective (412), dans lequel les bus en anneau sont interconnectés via un redresseur oscillant (410) couplé aux sections de distribution multiples ; et
un dispositif de commande (328) couplé aux sections de distribution multiples et au redresseur oscillant, le dispositif de commande comportant un processeur et un dispositif de stockage non transitoire lisible par machine stockant des instructions exécutables par le processeur pour amener la réalisation d'opérations comprenant :
la surveillance de la puissance fournie à ladite première section de distribution couplée au redresseur oscillant, la première section de distribution étant configurée pour distribuer la puissance à plusieurs dispositifs,
dans lequel la première section de distribution est configurée pour recevoir la puissance d'au moins une source de puissance, et
dans lequel l'unité de redressement respective (412) de la première section de distribution est couplée au bus en anneau de puissance respectif de la première section de distribution et est configurée pour ajuster une caractéristique de la puissance reçue ;
la surveillance de la puissance fournie à ladite seconde section de distribution des sections de distribution multiples couplées au redresseur oscillant, la seconde section de distribution étant configurée pour distribuer de la puissance à plusieurs dispositifs, dans lequel la seconde section de distribution est configurée pour recevoir de la puissance d'au moins une source d'alimentation, et dans lequel l'unité de redressement respective (412) de la seconde section de distribution est couplée au bus en anneau de puissance respectif de la seconde section de distribution et est configurée pour ajuster une caractéristique de la puissance reçue ;
la détection, par le dispositif de commande, qu'une demande de puissance au niveau du premier bus en anneau et/ou du second bus en anneau dépasse un seuil ;
la fourniture, par le dispositif de commande, d'un signal de commande au redresseur oscillant pour amener le redresseur oscillant à ajuster une capacité de puissance du premier et/ou du second bus en anneau ; et
l'ajustement, par le redresseur oscillant, de la capacité de puissance du premier et/ou du second bus en anneau sur la base du signal de commande en réponse à la détection par le dispositif de commande que la demande de puissance au niveau du premier et/ou du second bus en anneau dépasse le seuil.

2. Procédé mis en œuvre à l'aide d'un système de distribution de puissance comprenant plusieurs sections de distribution comprenant une première section de distribution et une seconde section de distribution, chacune dotée d'un bus en anneau de puissance et d'une unité de redressement respectifs, dans lequel les bus en anneau sont interconnectés par un redresseur oscillant couplé aux différentes sections de distribution, et un dispositif de commande est couplé aux sections de distribution multiples et au redresseur oscillant, le procédé comprend les opérations suivantes :
la surveillance de la puissance fournie à ladite première section de distribution couplée au redresseur oscillant, la première section de distribution distribuant la puissance à plusieurs dispositifs, dans lequel la première section de distribution reçoit la puissance d'au moins une source de puissance, et dans lequel une caractéristique de la puissance reçue est ajustée par l'unité de redressement respective de la première section de distribution couplée au bus en anneau de puissance respectif de la première section de distribution ;
la surveillance de la puissance fournie à ladite seconde section de distribution des sections de distribution multiples couplées au redresseur oscillant, la seconde section de distribution distribuant la puissance à plusieurs dispositifs, dans lequel la seconde section de distribution reçoit de la puissance d'au moins une source d'alimentation, et dans lequel une caractéristique de la puissance reçue est ajustée par l'unité de redressement respective (412) de la seconde section de distribution couplée au bus en anneau de puissance respectif de la seconde section de distribution ;
la détection, par le dispositif de commande, qu'une demande de puissance au niveau du premier bus en anneau et/ou du second bus en anneau dépasse un seuil ;
la fourniture, par le dispositif de commande, d'un signal de commande au redresseur oscillant pour amener le redresseur oscillant à ajuster une capacité de puissance du premier et/ou du second bus en anneau ; et
l'ajustement, par le redresseur oscillant, de la capacité de puissance du premier et/ou du second bus en anneau sur la base du signal de commande en réponse à la détection par le dispositif de commande que la demande de puissance du premier et/ou du second bus en anneau dépasse le seuil.

3. Système de distribution de puissance selon la revendication 1 ou procédé selon la revendication 2, dans lequel :
les multiples dispositifs et la première section de distribution du système de distribution de puissance sont situés dans un centre de données ; et
les opérations comprennent la commande, par le dispositif de commande, de l'augmentation ou de la diminution dynamiques de la puissance disponible au niveau du centre de données à l'aide de chacun du bus en anneau, du redresseur oscillant et des signaux de commande générés par le dispositif commande, dans lequel l'augmentation de puissance désigne une augmentation de la capacité de puissance et la diminution de puissance désigne une diminution de la capacité de puissance.
